# EUROPEAN PATENT APPLICATION

(11) **EP 4 412 162 A1**
(43) Date of publication of application: **07.08.2024**
(21) Application number: 24155602.6
(22) Date of filing: 02.02.2024
(51) Int. Cl.: H04L 12/28, H04L 41/0663, H04L 41/0659, H04L 49/55

(54) **CONTROL PLANE INITIATED SWITCHOVER FOR SUBSCRIBER GROUP**

(30) Priority: 03.02.2023 US 202363483172 P; 27.12.2023 US 202318397157
(71) Applicant: Juniper Networks, Inc., Sunnyvale, CA 94089 (US)
(72) Inventor: ZIEGLER, John E., Sunnyvale, 94089 (US); RANI, Balaji, Sunnyvale, 94089 (US); SUBRAMANIAN, Kannan, Sunnyvale, 94089 (US); RADULESCU-BANU, Cristina, Sunnyvale, 94089 (US)
(74) Representative: D Young & Co LLP

(57) **Abstract**

In some implementations, a disaggregated broadband network gateway (DBNG) control plane device may send, to a first DBNG user plane device that is an active DBNG user plane device for a subscriber group (SGRP), a first message indicating that the first DBNG user plane device is to be a backup DBNG user plane device for the SGRP. The DBNG may send, to a second DBNG user plane device that is the backup DBNG user plane device for the SGRP, a second message indicating that the second DBNG user plane device is to be the active DBNG user plane device for the SGRP.

## Description

### CROSS-REFERENCE TO RELATED APPLICATION

This Patent Application claims priority to U.S. Patent Application No. 63/483,172, filed on 3 February 2023 entitled "CONTROL PLANE INITIATED SWITCHOVER FOR TRACK-LOGICAL-PORT SUBSCRIBER GROUP", and also to U.S. Patent Application No. 18/397,157, filed on 27 December 2023 entitled "CONTROL PLANE INITIATED SWITCHOVER FOR SUBSCRIBER GROUP." The disclosure of the prior Applications is considered part of and is incorporated by reference into this Patent Application.

### BACKGROUND

A broadband network gateway (BNG) routes traffic to and from broadband remote access devices, such as digital subscriber line access multiplexers (DSLAMs), on an Internet service provider (ISP) network. The BNG enables subscribers to connect to the broadband network, and performs authentication, authorization, and accounting; assigns Internet protocol (IP) addresses; and enforces quality of service (QoS) policies, among other examples.

### SUMMARY

Particular aspects are set out in the appended independent claims. Various optional embodiments are set out in the dependent claims.

In some implementations, a method includes sending, by a disaggregated broadband network gateway (DBNG) control plane device, and to a first DBNG user plane device that is an active DBNG user plane device for a subscriber group (SGRP), a first message indicating that the first DBNG user plane device is to be a backup DBNG user plane device for the SGRP; and sending, by the DBNG control plane device, and to a second DBNG user plane device that is the backup DBNG user plane device for the SGRP, a second message indicating that the second DBNG user plane device is to be the active DBNG user plane device for the SGRP.

In some implementations, a computer-readable medium comprising (e.g. storing and/or conveying) a set of instructions includes one or more instructions that, when executed by one or more processors of a DBNG user plane device, cause the DBNG user plane device to: receive, from a DBNG control plane device, a message indicating that a role of the DBNG user plane device for an SGRP is to change; and cause, based on the message, the role of the DBNG user plane device for the SGRP to change.

In some implementations, a DBNG control plane device includes one or more memories; and one or more processors to: send, to a first DBNG user plane device, a first message indicating that the first DBNG user plane device is to cease having an active role for an SGRP and is to have a backup role for the SGRP; and send, to a second DBNG user plane device, a second message indicating the second DBNG user plane device is to cease having a backup role for the SGRP and is to have an active role for the SGRP.

### BRIEF DESCRIPTION OF THE DRAWINGS

Figs. 1A-1D are diagrams of an example implementation associated with a control plane initiated switchover for a subscriber group.
Fig. 2 is a diagram of an example environment in which systems and/or methods described herein may be implemented.
Fig. 3 is a diagram of example components of a device associated with a control plane initiated switchover for a subscriber group.
Fig. 4 is a diagram of example components of a device associated with a control plane initiated switchover for a subscriber group.
Fig. 5 is a flowchart of an example process associated with a control plane initiated switchover for a subscriber group.
Fig. 6 is a flowchart of an example process associated with a control plane initiated switchover for a subscriber group.

### DETAILED DESCRIPTION

The following detailed description of example implementations refers to the accompanying drawings. The same reference numbers in different drawings may identify the same or similar elements.

To accommodate growth in a quantity of subscribers, a quantity and types of services being provided by BNGs, and an amount of traffic being processed by BNGs, a disaggregated BNG (DBNG) may be deployed by a service provider. The DBNG physically and logically separates a control plane and a user plane (also termed a "data plane"). For example, software to perform control plane functions may be distributed for execution by servers as virtualized BNG functions. Devices to implement the user plane, which may include physical network devices or virtual user plane devices, remain in a forwarding path between access networks and a data network to process packet flows according to subscriber forwarding state rules programmed by the control plane.

A subscriber group (SGRP) in a DBNG is a group of subscriber devices that belong to a same service level or policy group of the DBNG. An SGRP may be created to provide a particular type of traffic, such as high-priority traffic (e.g., for business-critical applications) or low-priority traffic (e.g., less-critical applications), to the group of subscriber devices.

A control plane device of the DBNG can set up the SGRP to be serviced by an active user plane device and a backup user plane device. Accordingly, the SGRP may be associated with a logical port (e.g., that includes one or more of physical links, link aggregation group (LAG) interfaces, multi-protocol label switching (MPLS) pseudowires, and/or virtual local area network (LAN) interfaces, among other examples) of each user plane device (e.g., the logical port of the user plane device hosts the SGRP). In some cases, the SGRP may be created in a "track-logical-port" (TLP) mode, which allows the active user plane device to detect a failure associated with the active user plane device's logical port and thereby disable the logical port. This causes a switchover, which then allows the SGRP to be serviced by the backup user plane device (e.g., via the logical port of the backup user plane device).

While an active user plane device can cause a switchover for a TLP SGRP, there is a need, in some cases, for a control plane device to initiate a switchover for the TLP SGRP. For example, the control plane device may determine (e.g., by communicating with the active user plane device and/or another device) that the active user plane device is associated with one or more performance impacting issues. The one or more performance impacting issues may include, for example, a need for the active user plane device to be updated (e.g., via a software upgrade), a failure of the active user plane device, a failure of a component of the active user plane device associated with servicing the SGRP, a failure associated with an access network or aggregation network associated with the active user plane device, and/or an isolation of the active user plane device from a data network, among other examples. Accordingly, allowing the control plane device to cause a switchover for the TLP SGRP (rather than waiting for the active user plane device to detect the one or more performance impacting issues) can prevent a service disruption to the TLP SGRP that would otherwise occur, and allows the one or more performance impacting issues to be timely addressed, which improves a performance of the active user plane device.

In some implementations described herein, a DBNG control plane device facilitates establishment of an SGRP (e.g., a TLP SGRP), such that the SGRP is associated with a first DBNG user plane device (e.g., that has an active role for the SGRP) and a second DBNG user plane device (e.g., that has a backup role for the SGRP). Accordingly, a first logical port of the first DBNG user plane device has an active state for the SGRP and a second logical port of the second DBNG user plane device has a backup state for the SGRP.

Further, the DBNG control plane device determines that a switchover for the SGRP is to occur, such as to address a fault, failure, error, or other issue associated with a physical component of the first DBNG user plane device (e.g., that affects a set of active subscriber sessions serviced by the first DBNG user plane device); to address a fault, failure, error, or other issue associated with an entirety of the first DBNG user plane device; to address an isolation of the first DBNG user plane device (e.g., from a network of the DBNG); and/or to address a fault, failure, error, or other issue associated with the network of the DBNG; among other examples. Accordingly, the DBNG control plane device sends, to the first DBNG user plane device, a first message, which indicates that a role of the first DBNG user plane device for the SGRP is to change (e.g., from an active role to a backup role). The DBNG control plane device also sends, to the second DBNG user plane device, a second message, which indicates that a role of the second DBNG user plane device for the SGRP is to change (e.g., from a backup role to an active role).

The first DBNG user plane device, based on the first message, causes the role of the first DBNG user plane device for the SGRP to change from an active role to a backup role, which includes causing the first logical port of the first DBNG user plane device to have a backup state for the SGRP. The first DBNG user plane device, based on the second message, causes the role of the second DBNG user plane device for the SGRP to change from a backup role to an active role, which includes causing the second logical port of the second DBNG user plane device to have an active state for the SGRP.

The DBNG control plane device thereby causes the first DBNG user plane device to be offlined (e.g., to be unavailable for the SGRP). For example, the DBNG control plane device may send, to the first DBNG user plane device, a control message that causes the first DBNG user plane device to adjust one or more settings of the first DBNG user plane device to cause the first DBNG user plane device to be taken offline (e.g., with respect to the SGRP). Accordingly, a subscriber device associated with the SGRP sends traffic to the second DBNG user plane device (e.g., to the second logical port of the second DBNG user plane device), instead of the first DBNG user plane device, and the second DBNG user plane device then services the traffic (e.g., forwards the traffic to a destination associated with the traffic).

In this way, some implementations described herein enable the DBNG control plane device to initiate a switchover for a SGRP (e.g., a TLP SGRP), which is not currently available in DBNG environments. Further, the DBNG control plane device is able to determine that a switchover for the SGRP should occur when an active DBNG user plane device would not otherwise determine that the switchover for SGRP is to occur, such as when the active DBNG user plane device is affected by one or more performance impacting issues (e.g., a fault, failure, error, or other issue). Accordingly, the DBNG control plane device allows the one or more performance impacting issues to be timely addressed, which improves a performance of the active user plane device and prevents a service disruption to the SGRP that would otherwise occur (e.g., if the one or more performance impacting issues are left unaddressed).

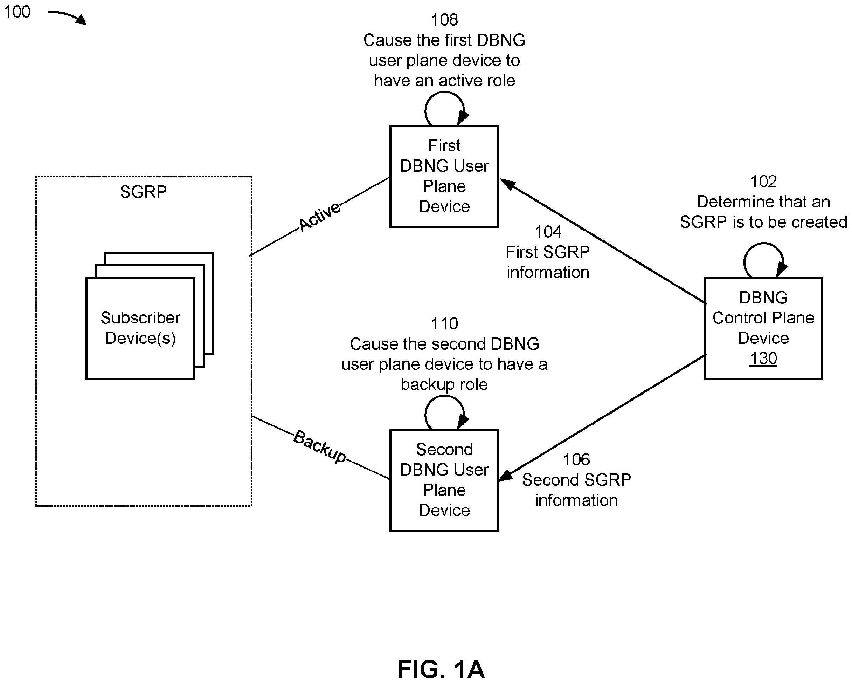

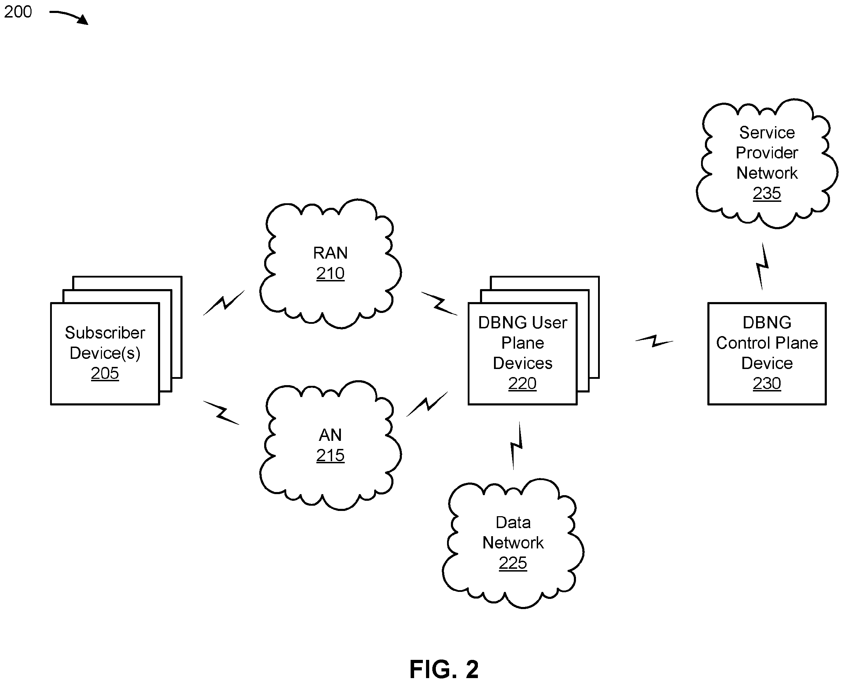

Figs. 1A-1D are diagrams of an example implementation 100 associated with control plane initiated switchover for a subscriber group. As shown in Figs. 1A-1D, example implementation 100 includes a DBNG control plane device, a first DBNG user plane device, a second DBNG user plane device, and one or more subscriber devices that are associated with a DBNG. These devices are described in more detail below in connection with Figs. 2-4.

As shown in Fig. 1A, and by reference number 102, the DBNG control plane device may determine that a SGRP is to be created. For example, the DBNG control plane device may identify a group of subscriber devices, which may include the one or more subscriber devices shown in Fig. 1A, that are to be included in the SGRP (e.g., because the group of subscriber devices are associated with a same, or similar, service level or policy group of the DBNG). Accordingly, the DBNG control plane device may perform one or more operations to cause the SGRP to be created.

As an example, as shown by reference numbers 104 and 106, when the SGRP is (or is to be) a track-logical-port (TLP) SGRP, the DBNG control plane device may send first SGRP information to the first DBNG user plane device and may send second SGRP information to the second DBNG user plane device. The first SGRP information may indicate that the first DBNG user plane device is to be an active DBNG user plane device for the SGRP and/or that a logical port of the first DBNG user plane device (hereinafter referred to as a "first" logical port of the first DBNG user plane device) is to be associated with the SGRP and is to have an active state. The first logical port may include one or more physical links, one or more LAG interfaces, one or more MPLS pseudowires, and/or one or more virtual local area network (VLAN) interfaces, among other examples, of the first DBNG user plane device. The second SGRP information may indicate that the second DBNG user plane device is to be a backup DBNG user plane device for the SGRP and/or that a logical port of the second DBNG user plane device (hereinafter referred to as a "second" logical port of the second DBNG user plane device) is to be associated with the SGRP and is to have a backup state. The second logical port may include one or more physical links, one or more LAG interfaces, one or more MPLS pseudowires, and/or one or more VLAN interfaces, among other examples, of the second DBNG user plane device.

Accordingly, as shown by reference number 108, the first DBNG user plane device may cause, based on the first SGRP information, the first DBNG user plane device to have an active role for the SGRP (e.g., cause the first DBNG user plane device to be an active DBNG user plane device for the SGRP), which may include causing the first logical port to be generated and/or to have an active state (e.g., for the SGRP). Additionally, as shown by reference number 110, the second DBNG user plane device may cause, based on the second SGRP information, the second DBNG user plane device to have a backup role for the SGRP (e.g., cause the second DBNG user plane device to be a backup DBNG user plane device for the SGRP), which may include causing the second logical port to be generated and/or to have a backup state (e.g., for the SGRP).

In this way, because the SGRP is a TLP SGRP, the first DBNG user plane device may be configured to detect one or more issues associated with the first logical port, and thereby initiate (e.g., based on detecting the one or more issues) a switchover for the SGRP, such that the respective roles of the first DBNG user plane device and the second DBNG user plane device are reversed (e.g., from active to backup, and backup to active) and/or the states of the first logical port and the second logical port are reversed (e.g., from active to backup, and backup to active).

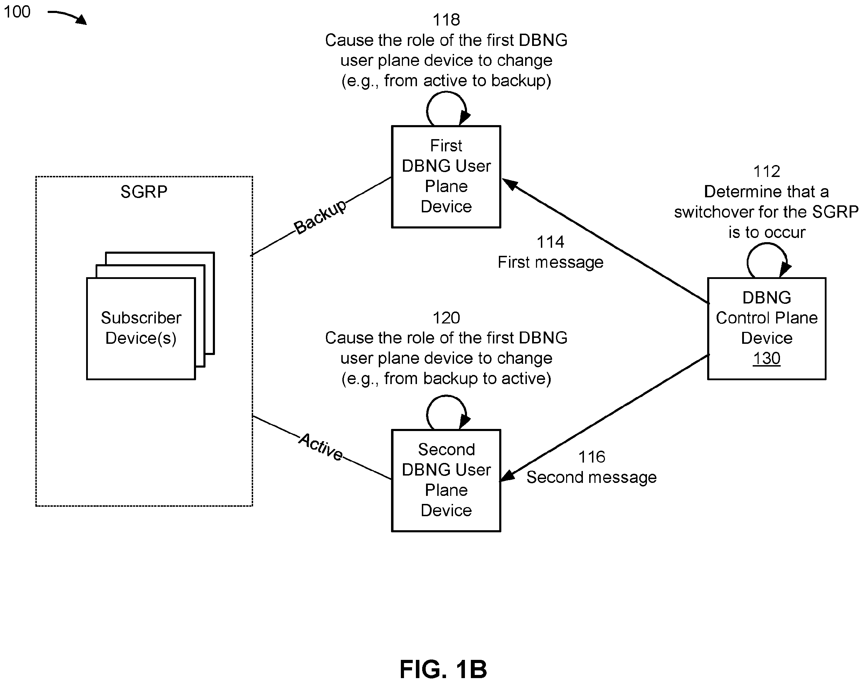

As shown in Fig. 1B, and by reference number 112, the DBNG control plane device may determine that a switchover for the SGRP is to occur. For example, the DBNG control plane device may obtain switchover information indicating that the first DBNG user plane device is to be offlined (e.g., taken offline, such as to make the first DBNG user plane device unavailable to service the SGRP), such as for maintenance and/or to resolve one or more issues. In some implementations, the switchover information may indicate one or more reasons that the first DBNG user plane device is to be offlined, such as to update software of the first DBNG user plane device; to address a fault, failure, error, or other issue associated with a physical component of the first DBNG user plane device (e.g., that affects a set of active subscriber sessions serviced by the first DBNG user plane device); to address a fault, failure, error, or other issue associated with an entirety of the first DBNG user plane device; to address an isolation of the first DBNG user plane device (e.g., from a network of the DBNG); and/or to address a fault, failure, error, or other issue associated with the network of the DBNG, among other examples. The DBNG control plane device may obtain the switchover information based on monitoring the first DBNG user plane device and/or the network of the DBNG, based on communicating with the first DBNG user plane device and/or the second DBNG user plane device; and/or communicating with another device (e.g., another device of the DBNG).

As shown by reference number 114, the DBNG control plane device may send, to the first DBNG user plane device (e.g., that is the active DBNG user plane device for the SGRP), a first message (e.g., based on determining that the switchover for the SGRP is to occur). The first message may indicate that a role of the first DBNG user plane device for the SGRP is to change. For example, the first message may indicate that the first DBNG user plane device is to cease having an active role for the SGRP (e.g., the first DBNG user plane device is to cease being the active DBNG user plane device for the SGRP) and/or is to have a backup role for the SGRP (e.g., the first DBNG user plane device is to be the backup DBNG user plane device for the SGRP). The first message may be, for example, an SGRP modify message (e.g., as described in the broadband forum (BBF) working text 459 (WT-459) issues 2 and 3).

As shown by reference number 116, the DBNG control plane device may send, to the second DBNG user plane device (e.g., that is the backup DBNG user plane device for the SGRP), a second message (e.g., based on determining that the switchover for the SGRP is to occur). The second message may indicate that a role of the second DBNG user plane device for the SGRP is to change. For example, the second message may indicate that the second DBNG user plane device is to cease having a backup role for the SGRP (e.g., the second DBNG user plane device is to cease being the backup DBNG user plane device for the SGRP) and/or is to have an active role for the SGRP (e.g., the second DBNG user plane device is to be the active DBNG user plane device for the SGRP). The second message may be, for example, an SGRP modify message (e.g., as described in the BBF WT-459 issues 2 and 3).

As shown by reference number 118, the first DBNG user plane device may cause the role of the first DBNG user plane device for the SGRP to change (e.g., based on the first message). For example, the first DBNG user plane device may cause the role of the first DBNG user plane device for the SGRP to change from an active role to a backup role. This may include causing the first logical port of the first DBNG user plane device (e.g., that has an active state) to have a backup state (e.g., for the SGRP).

As shown by reference number 120, the second DBNG user plane device may cause the role of the second DBNG user plane device for the SGRP to change (e.g., based on the second message). For example, the first DBNG user plane device may cause the role of the second DBNG user plane device for the SGRP to change from a backup role to an active role. This may include causing the second logical port of the second DBNG user plane device (e.g., that has a backup state) to have an active state (e.g., for the SGRP).

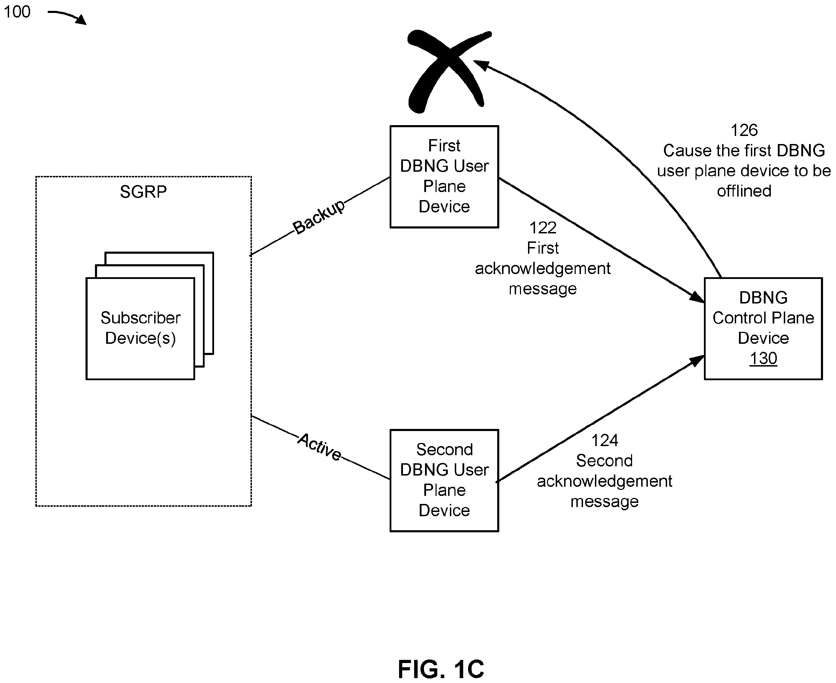

As shown in Fig. 1C, and by reference number 122, the first DBNG user plane device may send, to the DBNG control plane device, a first acknowledgement message (e.g., based on causing the role of the first DBNG user plane device for the SGRP to change). The first acknowledgement message may indicate that the role of the first DBNG user plane device for the SGRP has changed (e.g., from an active role to a backup role) and/or that the first logical port of the first DBNG user plane device has a backup state (e.g., for the SGRP). Additionally, or alternatively, as shown by reference number 124, the second DBNG user plane device may send, to the DBNG control plane device, a second acknowledgement message (e.g., based on causing the role of the second DBNG user plane device for the SGRP to change). The second acknowledgement message may indicate that the role of the second DBNG user plane device for the SGRP has changed (e.g., from a backup role to an active role) and/or that the second logical port of the second DBNG user plane device has an active state (e.g., for the SGRP).

Accordingly, as shown by reference number 126, the DBNG control plane device may cause the first DBNG user plane device to be offlined (e.g., based on receiving the first acknowledgement message and/or receiving the second acknowledgement message). For example, the DBNG control plane device may send, to the first DBNG user plane device, a control message. The control message may indicate that the first DBNG user plane device is to be offlined (e.g., for maintenance and/or to resolve one or more issues). Accordingly, the first DBNG user plane device may cause the first DBNG user plane device to be offlined (e.g., based on the control message). For example, the first DBNG user plane device may adjust one or more settings of the first DBNG user plane device to cause the first DBNG user plane device to be taken offline (e.g., with respect to the SGRP).

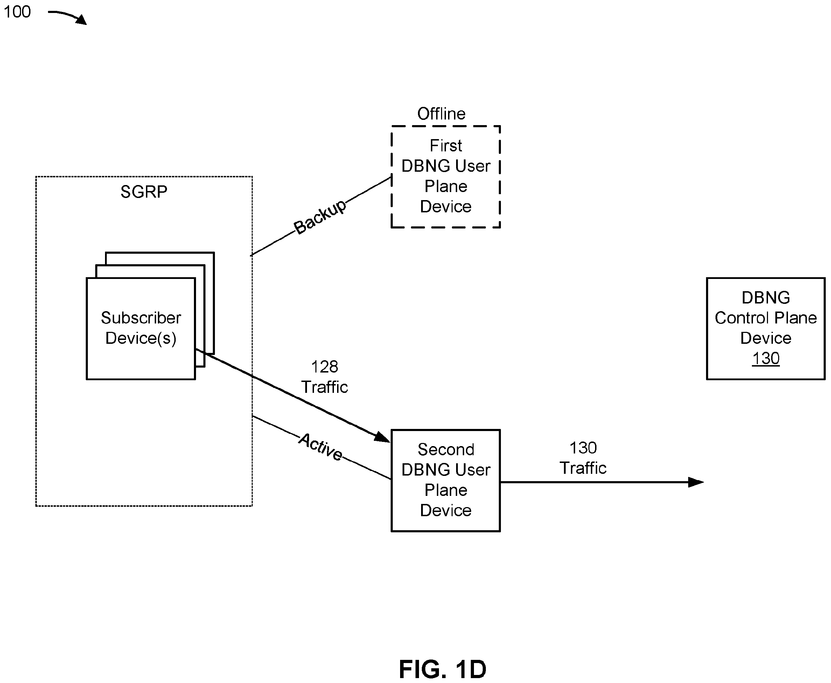

As shown in Fig. 1D, and by reference number 128, a subscriber device, of the one or more subscriber devices, may send traffic associated with the SGRP (e.g., traffic that is destined for a data network of the DBNG). Accordingly, because the second DBNG user plane device has an active role for the SGRP and/or the second logical port of the second DBNG user plane device has an active state (e.g., for the SGRP), the second DBNG user plane device may receive the traffic (as opposed to the first DBNG user plane device). As shown by reference number 130, the second DBNG user plane device may forward the traffic (e.g., because the second DBNG user plane device has the active role for the SGRP and/or the second logical port of the second DBNG user plane device has the active state), such as to the data network of the DBNG.

As indicated above, Figs. 1A-1D are provided as an example. Other examples may differ from what is described with regard to Figs. 1A-1D. The number and arrangement of devices shown in Figs. 1A-1D are provided as an example. In practice, there may be additional devices, fewer devices, different devices, or differently arranged devices than those shown in Figs. 1A-1D. Furthermore, two or more devices shown in Figs. 1A-1D may be implemented within a single device, or a single device shown in Figs. 1A-1D may be implemented as multiple, distributed devices. Additionally, or alternatively, a set of devices (e.g., one or more devices) shown in Figs. 1A-1D may perform one or more functions described as being performed by another set of devices shown in Figs. 1A-1D.

Fig. 2 is a diagram of an example environment 200 in which systems and/or methods described herein may be implemented. As shown in Fig. 2, example environment 200 may include one or more subscriber devices 205, a radio access network (RAN) 210, an access network (AN) 215, multiple DBNG user plane devices 220, a data network 225, a DBNG control plane device 230, and/or a service provider network 235. Devices and/or networks of example environment 200 may interconnect via wired connections, wireless connections, or a combination of wired and wireless connections.

Subscriber device 205 includes one or more devices capable of receiving, generating, storing, processing, and/or providing information, such as information described herein. For example, subscriber device 205 may include a mobile phone (e.g., a smart phone or a radiotelephone), a laptop computer, a tablet computer, a desktop computer, a handheld computer, a gaming device, a wearable communication device (e.g., a smart watch or a pair of smart glasses), a mobile hotspot device, a fixed wireless access device, customer premises equipment, or a similar type of device. In some implementations, subscriber device 205 may provide and/or receive network traffic to and/or from DBNG user plane device 220 via RAN 210 or AN 215.

RAN 210 may support, for example, a cellular radio access technology (RAT). RAN 210 may include one or more base stations (e.g., base transceiver stations, radio base stations, node Bs, eNodeBs (eNBs), gNodeBs (gNBs), base station subsystems, cellular sites, cellular towers, access points, transmit receive points (TRPs), radio access nodes, macrocell base stations, microcell base stations, picocell base stations, femtocell base stations, or similar types of devices) and other network entities that can support wireless communication for subscriber device 205. RAN 210 may transfer traffic between subscriber device 205 (e.g., using a cellular RAT), one or more base stations (e.g., using a wireless interface or a backhaul interface, such as a wired backhaul interface), DBNG user plane device 220, and/or data network 225. RAN 210 may provide one or more cells that cover geographic areas.

AN 215 includes one or more wired and/or wireless networks. For example, AN 215 may include a cellular network (e.g., a fifth generation (5G) network, a fourth generation (4G) network, a long-term evolution (LTE) network, a third generation (3G) network, a code division multiple access (CDMA) network, etc.), a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, and/or a combination of these or other types of networks. AN 215 may transfer traffic between subscriber device 205, DBNG user plane device 220, and/or data network 225.

DBNG user plane device 220 includes one or more devices capable of receiving, processing, storing, routing, and/or providing traffic (e.g., a packet and/or other information or metadata) in a manner described herein. For example, DBNG user plane device 220 may include a router, such as a label switching router (LSR), a label edge router (LER), an ingress router, an egress router, a provider router (e.g., a provider edge router or a provider core router), a virtual router, or another type of router. Additionally, or alternatively, DBNG user plane device 220 may include a gateway, a switch, a firewall, a hub, a bridge, a reverse proxy, a server (e.g., a proxy server, a cloud server, or a data center server), a load balancer, and/or a similar device. In some implementations, DBNG user plane device 220 may be a physical device implemented within a housing, such as a chassis. In some implementations, DBNG user plane device 220 may be a virtual device implemented by one or more computing devices of a cloud computing environment or a data center. In some implementations, a group of DBNG user plane devices 220 may be a group of data center nodes that are used to route traffic flow through a network. DBNG user plane device 220 may transfer traffic between subscriber device 205 and/or data network 225, such as via a logical port of the DBNG user plane device 220. DBNG user plane device 220 may perform user plane functionality for a DBNG.

Data network 225 includes one or more wired and/or wireless data networks. For example, data network 225 may include an IP Multimedia Subsystem (IMS), a public land mobile network (PLMN), a local area network (LAN), a wide area network (WAN), a metropolitan area network (MAN), a private network such as a corporate intranet, an ad hoc network, the Internet, a fiber optic-based network, a cloud computing network, a third party services network, an operator services network, and/or a combination of these or other types of networks.

DBNG control plane device 230 includes one or more devices capable of receiving, generating, storing, processing, providing, and/or routing information, as described elsewhere herein. DBNG control plane device 230 may include a communication device and/or a computing device. For example, the DBNG control plane device 230 may include a server, such as an application server, a client server, a host server, a proxy server, a virtual server (e.g., executing on computing hardware), or a server in a cloud computing system. In some implementations, DBNG control plane device 230 includes computing hardware used in a cloud computing environment. DBNG control plane device 230 may perform control plane functionality for a DBNG. Control plane functionality includes multiple control plane functions, such as subscriber session termination, performing signaling protocols such as Point-to-Point Protocol over Ethernet (PPPoE), IP over Ethernet (IPoE), IP address assignment and management, authentication/authorization/accounting (AAA), policy enforcement, gateway operations, lawful intercept, local management, keep-alive message processing, and configuring DBNG user plane device 220.

Service provider network 235 includes one or more wired and/or wireless networks (e.g., that are associated with a service provider, such as an Internet service provider (ISP)). For example, the service provider network 235 may include a wireless wide area network (e.g., a cellular network or a public land mobile network), a local area network (e.g., a wired local area network or a wireless local area network (WLAN), such as a Wi-Fi network), a personal area network (e.g., a Bluetooth network), a near-field communication network, a telephone network, a private network, the Internet, and/or a combination of these or other types of networks.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of example environment 200 may perform one or more functions described as being performed by another set of devices of example environment 200.

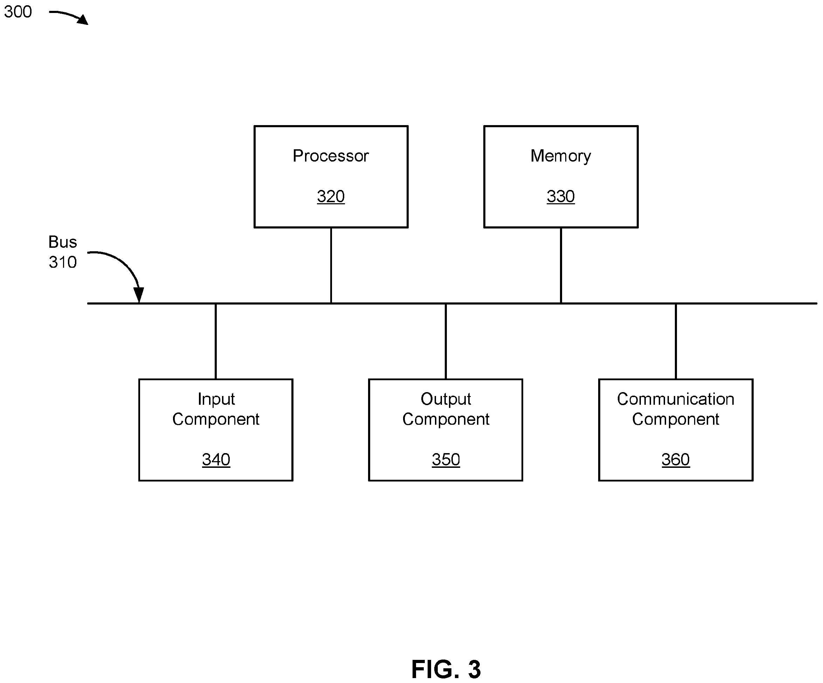

Fig. 3 is a diagram of example components of a device 300 associated with a control plane initiated switchover for a subscriber group. The device 300 may correspond to subscriber device 205, DBNG user plane device 220, and/or DBNG control plane device 230. In some implementations, subscriber device 205, DBNG user plane device 220, and/or DBNG control plane device 230 may include one or more devices 300 and/or one or more components of the device 300. As shown in Fig. 3, the device 300 may include a bus 310, a processor 320, a memory 330, an input component 340, an output component 350, and/or a communication component 360.

The bus 310 may include one or more components that enable wired and/or wireless communication among the components of the device 300. The bus 310 may couple together two or more components of Fig. 3, such as via operative coupling, communicative coupling, electronic coupling, and/or electric coupling. For example, the bus 310 may include an electrical connection (e.g., a wire, a trace, and/or a lead) and/or a wireless bus. The processor 320 may include a central processing unit, a graphics processing unit, a microprocessor, a controller, a microcontroller, a digital signal processor, a field-programmable gate array, an application-specific integrated circuit, and/or another type of processing component. The processor 320 may be implemented in hardware, firmware, or a combination of hardware and software. In some implementations, the processor 320 may include one or more processors capable of being programmed to perform one or more operations or processes described elsewhere herein.

The memory 330 may include volatile and/or nonvolatile memory. For example, the memory 330 may include random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). The memory 330 may be a non-transitory computer-readable medium. The memory 330 may store information, one or more instructions, and/or software (e.g., one or more software applications) related to the operation of the device 300. In some implementations, the memory 330 may include one or more memories that are coupled (e.g., communicatively coupled) to one or more processors (e.g., processor 320), such as via the bus 310. Communicative coupling between a processor 320 and a memory 330 may enable the processor 320 to read and/or process information stored in the memory 330 and/or to store information in the memory 330.

The input component 340 may enable the device 300 to receive input, such as user input and/or sensed input. For example, the input component 340 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 350 may enable the device 300 to provide output, such as via a display, a speaker, and/or a light-emitting diode. The communication component 360 may enable the device 300 to communicate with other devices via a wired connection and/or a wireless connection. For example, the communication component 360 may include a receiver, a transmitter, a transceiver, a modem, a network interface card, and/or an antenna.

The device 300 may perform one or more operations or processes described herein. For example, a computer-readable medium may provide a set of instructions (e.g., one or more instructions or code) for execution by the processor 320. Such a computer readable medium may for example be memory 330 and/or a transmission medium received via communication component 360 and/or transmitted over the bus 310.. The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

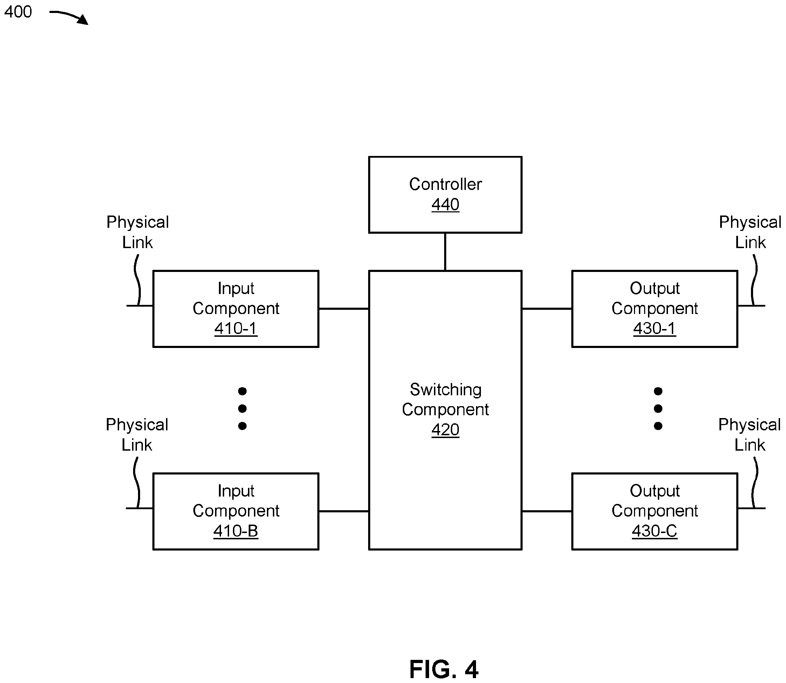

Fig. 4 is a diagram of example components of a device 400 associated with a control plane initiated switchover for a subscriber group. Device 400 may correspond to subscriber device 205, DBNG user plane device 220, and/or DBNG control plane device 230. In some implementations, to subscriber device 205, DBNG user plane device 220, and/or DBNG control plane device 230 may include one or more devices 400 and/or one or more components of device 400. As shown in Fig. 4, device 400 may include one or more input components 410-1 through 410-B (B > 1) (hereinafter referred to collectively as input components 410, and individually as input component 410), a switching component 420, one or more output components 430-1 through 430-C (C ≥ 1) (hereinafter referred to collectively as output components 430, and individually as output component 430), and a controller 440.

Input component 410 may be one or more points of attachment for physical links and may be one or more points of entry for incoming traffic, such as packets. Input component 410 may process incoming traffic, such as by performing data link layer encapsulation or decapsulation. In some implementations, input component 410 may transmit and/or receive packets. In some implementations, input component 410 may include an input line card that includes one or more packet processing components (e.g., in the form of integrated circuits), such as one or more interface cards (IFCs), packet forwarding components, line card controller components, input ports, processors, memories, and/or input queues. In some implementations, device 400 may include one or more input components 410.

Switching component 420 may interconnect input components 410 with output components 430. In some implementations, switching component 420 may be implemented via one or more crossbars, via busses, and/or with shared memories. The shared memories may act as temporary buffers to store packets from input components 410 before the packets are eventually scheduled for delivery to output components 430. In some implementations, switching component 420 may enable input components 410, output components 430, and/or controller 440 to communicate with one another.

Output component 430 may store packets and may schedule packets for transmission on output physical links. Output component 430 may support data link layer encapsulation or decapsulation, and/or a variety of higher-level protocols. In some implementations, output component 430 may transmit packets and/or receive packets. In some implementations, output component 430 may include an output line card that includes one or more packet processing components (e.g., in the form of integrated circuits), such as one or more IFCs, packet forwarding components, line card controller components, output ports, processors, memories, and/or output queues. In some implementations, device 400 may include one or more output components 430. In some implementations, input component 410 and output component 430 may be implemented by the same set of components (e.g., and input/output component may be a combination of input component 410 and output component 430).

Controller 440 includes a processor in the form of, for example, a CPU, a graphics processing unit (GPU), an accelerated processing unit (APU), a microprocessor, a microcontroller, a digital signal processor (DSP), a field-programmable gate array (FPGA), an application-specific integrated circuit (ASIC), and/or another type of processor. The processor is implemented in hardware, firmware, or a combination of hardware and software. In some implementations, controller 440 may include one or more processors that can be programmed to perform a function.

In some implementations, controller 440 may include a RAM, a ROM, and/or another type of dynamic or static storage device (e.g., a flash memory, a magnetic memory, an optical memory, etc.) that stores information and/or instructions for use by controller 440.

In some implementations, controller 440 may communicate with other devices, networks, and/or systems connected to device 400 to exchange information regarding network topology. Controller 440 may create routing tables based on the network topology information, may create forwarding tables based on the routing tables, and may forward the forwarding tables to input components 410 and/or output components 430. Input components 410 and/or output components 430 may use the forwarding tables to perform route lookups for incoming and/or outgoing packets.

Controller 440 may perform one or more processes described herein. Controller 440 may perform these processes in response to executing software instructions provided by a computer-readable medium. A computer-readable medium may be a computer-readable storage medium or a computer-readable transmission medium. A computer-readable storage medium may be termed a non-transitory memory device. A memory device includes memory space within a single physical storage device or memory space spread across multiple physical storage devices. A computer-readable transmission medium may be used to convey instructions. A computer-readable transmission medium may include carrier waves, transmission signals or the like. A computer-readable transmission medium may convey instructions between components of a single computer system and/or between plural separate computer systems.

Software instructions may be read into a memory and/or storage component associated with controller 440 from another computer-readable medium or from another device via a communication interface. When executed, software instructions stored in a memory and/or storage component associated with controller 440 may cause controller 440 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 4 are provided as an example. In practice, device 400 may include additional components, fewer components, different components, or differently arranged components than those shown in Fig. 4. Additionally, or alternatively, a set of components (e.g., one or more components) of device 400 may perform one or more functions described as being performed by another set of components of device 400.

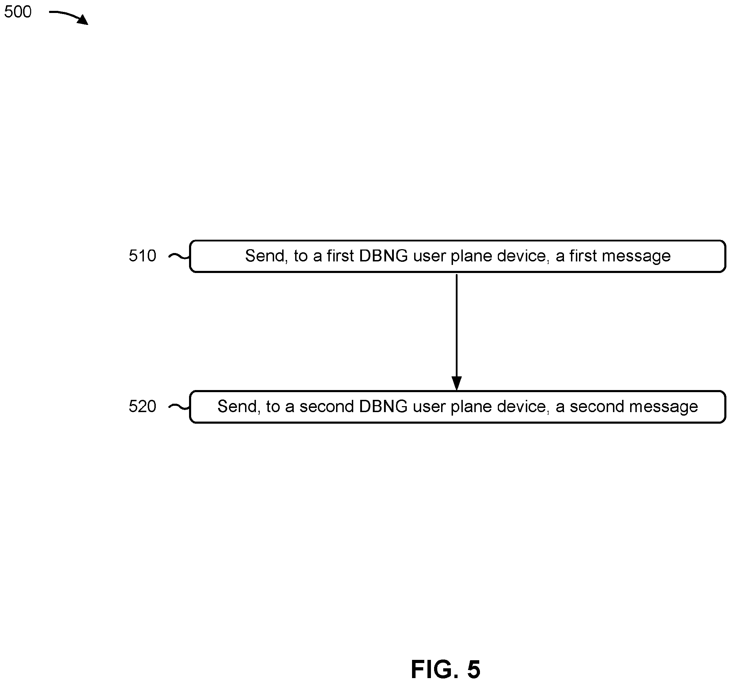

Fig. 5 is a flowchart of an example process 500 associated with a control plane initiated switchover for a subscriber group. In some implementations, one or more process blocks of Fig. 5 are performed by a DBNG control plane device (e.g., DBNG control plane device 230). In some implementations, one or more process blocks of Fig. 5 are performed by another device or a group of devices separate from or including the DBNG control plane device, such as a subscriber device (e.g., subscriber device 205) and/or a DBNG user plane device (e.g., DBNG user plane device 220). Additionally, or alternatively, one or more process blocks of Fig. 5 may be performed by one or more components of device 300, such as processor 320, memory 330, input component 340, output component 350, and/or communication component 360; of device 400, such as input component 410, switching component 420, output component 430, and/or controller 440; and/or of another device.

As shown in Fig. 5, process 500 may include sending, to a first DBNG user plane device, a first message (block 510). For example, the DBNG control plane device may send, to a first DBNG user plane device that is an active DBNG user plane device for an SGRP, a first message, as described above. The first message may indicate that the first DBNG user plane device is to be a backup DBNG user plane device for the SGRP.

As further shown in Fig. 5, process 500 may include sending, to a second DBNG user plane device, a second message (block 520). For example, the DBNG control plane device may send, to a second DBNG user plane device that is the backup DBNG user plane device for the SGRP, a second message, as described above. The second message may indicate that the second DBNG user plane device is to be the active DBNG user plane device for the SGRP.

Process 500 may include additional implementations, such as any single implementation or any combination of implementations described below and/or in connection with one or more other processes described elsewhere herein.

In a first implementation, sending the first message to the first DBNG user plane device causes a first logical port of the first DBNG user plane device that is associated with the SGRP to have a backup state, and sending the second message to the second DBNG user plane device causes a second logical port of the second DBNG user plane device that is associated with the SGRP to have an active state.

In a second implementation, alone or in combination with the first implementation, the SGRP is a TLP SGRP.

In a third implementation, alone or in combination with one or more of the first and second implementations, each of the first message and the second message is an SGRP modify message.

In a fourth implementation, alone or in combination with one or more of the first through third implementations, process 500 includes receiving, from the first DBNG user plane device, a first acknowledgement message associated with the first message, receiving, from the second DBNG user plane device, a second acknowledgement message associated with the second message, and causing, based on receiving the first acknowledgement message and receiving the second acknowledgement message, the first DBNG user plane device to be offlined.

In a fifth implementation, alone or in combination with one or more of the first through fourth implementations, process 500 includes sending, after sending the first message and the second message, and to the first DBNG user plane device, a third message indicating that the first DBNG user plane device is to be offlined.

In a sixth implementation, alone or in combination with one or more of the first through fifth implementations, process 500 includes sending the third message to the first DBNG user plane device causes the first DBNG user plane device to be offlined.

Although Fig. 5 shows example blocks of process 500, in some implementations, process 500 includes additional blocks, fewer blocks, different blocks, or differently arranged blocks than those depicted in Fig. 5. Additionally, or alternatively, two or more of the blocks of process 500 may be performed in parallel.

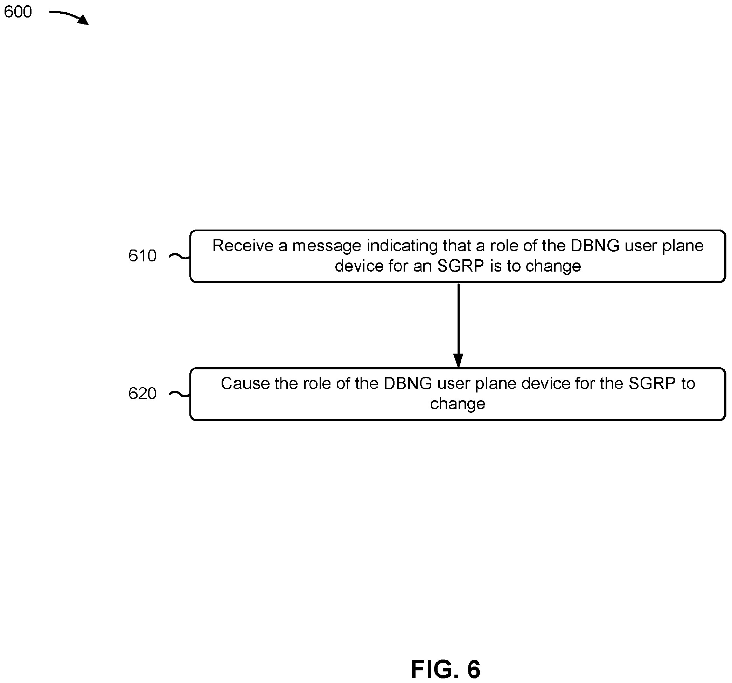

Fig. 6 is a flowchart of an example process 600 associated with a control plane initiated switchover for a subscriber group. In some implementations, one or more process blocks of Fig. 6 are performed by a DBNG user plane device (e.g., DBNG user plane device 220). In some implementations, one or more process blocks of Fig. 6 are performed by another device or a group of devices separate from or including the DBNG user plane device, such as a subscriber device (e.g., subscriber device 205) and/or a DBNG control plane device (e.g., DBNG control plane device 230). Additionally, or alternatively, one or more process blocks of Fig. 6 may be performed by one or more components of device 300, such as processor 320, memory 330, input component 340, output component 350, and/or communication component 360; of device 400, such as input component 410, switching component 420, output component 430, and/or controller 440; and/or of another device.

As shown in Fig. 6, process 600 may include receiving a message indicating that a role of the DBNG user plane device for an SGRP is to change (block 610). For example, the DBNG user plane device may receive, from a DBNG control plane device, a message indicating that a role of the DBNG user plane device for an SGRP is to change, as described above.

As further shown in Fig. 6, process 600 may include causing the role of the DBNG user plane device for the SGRP to change (block 620). For example, the DBNG user plane device may cause, based on the message, the role of the DBNG user plane device for the SGRP to change, as described above.

Process 600 may include additional implementations, such as any single implementation or any combination of implementations described below and/or in connection with one or more other processes described elsewhere herein.

In a first implementation, causing the role of the DBNG user plane device for the SGRP to change includes causing the role of the DBNG user plane device for the SGRP to change from an active role to a backup role.

In a second implementation, alone or in combination with the first implementation, causing the role of the DBNG user plane device for the SGRP to change includes causing a logical port of the DBNG user plane device that is associated with the SGRP to have a backup state.

In a third implementation, alone or in combination with one or more of the first and second implementations, causing the role of the DBNG user plane device for the SGRP to change includes causing the role of the DBNG user plane device for the SGRP to change from a backup role to an active role.

In a fourth implementation, alone or in combination with one or more of the first through third implementations, causing the role of the DBNG user plane device for the SGRP to change includes causing a logical port of the DBNG user plane device that is associated with the SGRP to have an active state.

In a fifth implementation, alone or in combination with one or more of the first through fourth implementations, the SGRP is a TLP SGRP.

In a sixth implementation, alone or in combination with one or more of the first through fifth implementations, the message is an SGRP modify message.

In a seventh implementation, alone or in combination with one or more of the first through sixth implementations, process 600 includes sending, based on causing the role of the DBNG user plane device for the SGRP to change, an acknowledgement message.

In an eighth implementation, alone or in combination with one or more of the first through seventh implementations, process 600 includes receiving, from the DBNG control plane device, another message indicating that the DBNG user plane device is to be offlined, and causing, based on the other message, the DBNG user plane device to be offlined.

Although Fig. 6 shows example blocks of process 600, in some implementations, process 600 includes additional blocks, fewer blocks, different blocks, or differently arranged blocks than those depicted in Fig. 6. Additionally, or alternatively, two or more of the blocks of process 600 may be performed in parallel.

Threfore, from one perspective, there have been described approaches for, a disaggregated broadband network gateway (DBNG) control plane device to send, to a first DBNG user plane device that is an active DBNG user plane device for a subscriber group (SGRP), a first message indicating that the first DBNG user plane device is to be a backup DBNG user plane device for the SGRP. The DBNG sends, to a second DBNG user plane device that is the backup DBNG user plane device for the SGRP, a second message indicating that the second DBNG user plane device is to be the active DBNG user plane device for the SGRP.

Further examples are set out in the following numbered clauses.

Clause 1. A method, comprising: sending, by a disaggregated broadband network gateway (DBNG) control plane device, and to a first DBNG user plane device that is an active DBNG user plane device for a subscriber group (SGRP), a first message indicating that the first DBNG user plane device is to be a backup DBNG user plane device for the SGRP; and sending, by the DBNG control plane device, and to a second DBNG user plane device that is the backup DBNG user plane device for the SGRP, a second message indicating that the second DBNG user plane device is to be the active DBNG user plane device for the SGRP.

Clause 2. The method of clause 1, wherein: sending the first message to the first DBNG user plane device causes a first logical port of the first DBNG user plane device that is associated with the SGRP to have a backup state; and sending the second message to the second DBNG user plane device causes a second logical port of the second DBNG user plane device that is associated with the SGRP to have an active state.

Clause 3. The method of clause 1 or 2, wherein the SGRP is a track-logical-port (TLP) SGRP.

Clause 4. The method of clause 1, 2 or 3, wherein each of the first message and the second message is an SGRP modify message.

Clause 5. The method of any of clauses 1 to 4, further comprising: receiving, from the first DBNG user plane device, a first acknowledgement message associated with the first message; receiving, from the second DBNG user plane device, a second acknowledgement message associated with the second message; and causing, based on receiving the first acknowledgement message and receiving the second acknowledgement message, the first DBNG user plane device to be offlined.

Clause 6. The method of any of clauses 1 to 5, further comprising: sending, after sending the first message and the second message, and to the first DBNG user plane device, a third message indicating that the first DBNG user plane device is to be offlined.

Clause 7. The method of clause 6, wherein: sending the third message to the first DBNG user plane device causes the first DBNG user plane device to be offlined.

Clause 8. A computer-readable medium comprising a set of instructions, the set of instructions comprising: one or more instructions that, when executed by one or more processors of a disaggregated broadband network gateway (DBNG) user plane device, cause the DBNG user plane device to: receive, from a DBNG control plane device, a message indicating that a role of the DBNG user plane device for a subscriber group (SGRP) is to change; and cause, based on the message, the role of the DBNG user plane device for the SGRP to change.

Clause 9. The computer-readable medium of clause 8, wherein the one or more instructions, to cause the DBNG user plane device to cause the role of the DBNG user plane device for the SGRP to change: cause the role of the DBNG user plane device for the SGRP to change from an active role to a backup role.

Clause 10. The computer-readable medium of clause 8 or 9, wherein the one or more instructions, to cause the DBNG user plane device to cause the role of the DBNG user plane device for the SGRP to change: cause a logical port of the DBNG user plane device that is associated with the SGRP to have a backup state.

Clause 11. The computer-readable medium of clause 8, 9 or 10, wherein the one or more instructions, to cause the DBNG user plane device to cause the role of the DBNG user plane device for the SGRP to change: cause the role of the DBNG user plane device for the SGRP to change from a backup role to an active role.

Clause 12. The computer-readable medium of any of clauses 8 to 11, wherein the one or more instructions, to cause the DBNG user plane device to cause the role of the DBNG user plane device for the SGRP to change: cause a logical port of the DBNG user plane device that is associated with the SGRP to have an active state.

Clause 13. The computer-readable medium of any of clauses 8 to 12, wherein the SGRP is a track-logical-port (TLP) SGRP.

Clause 14. The computer-readable medium of any of clauses 8 to 13, wherein the message is an SGRP modify message.

Clause 15. The computer-readable medium of any of clauses 8 to 14, wherein the one or more instructions further cause the DBNG user plane device to: send, based on causing the role of the DBNG user plane device for the SGRP to change, an acknowledgement message.

Clause 16. The computer-readable medium of any of clauses 8 to 17, wherein the one or more instructions further cause the DBNG user plane device to: receive, from the DBNG control plane device, another message indicating that the DBNG user plane device is to be offlined; and cause, based on the other message, the DBNG user plane device to be offlined.

Clause 17. A disaggregated broadband network gateway (DBNG) control plane device, comprising: one or more memories; and one or more processors to: send, to a first DBNG user plane device, a first message indicating that the first DBNG user plane device is to cease having an active role for a subscriber group (SGRP) and is to have a backup role for the SGRP; and send, to a second DBNG user plane device, a second message indicating the second DBNG user plane device is to cease having a backup role for the SGRP and is to have an active role for the SGRP.

Clause 18. The DBNG control plane device of clause 17, wherein: sending the first message to the first DBNG user plane device causes a first logical port of the first DBNG user plane device that is associated with the SGRP to have a backup state; and sending the second message to the second DBNG user plane device causes a second logical port of the second DBNG user plane device that is associated with the SGRP to have an active state.

Clause 19. The DBNG control plane device of clause 17 or 18, wherein the SGRP is a track-logical-port (TLP) SGRP.

Clause 20. The DBNG control plane device of clause 17, 18 or 19, wherein the one or more processors are further to: send, after sending the first message and the second message, a third message to the first DBNG user plane device to cause the first DBNG user plane device to be offlined.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, traffic or content may include a set of packets. A packet may refer to a communication structure for communicating information, such as a protocol data unit (PDU), a service data unit (SDU), a network packet, a datagram, a segment, a message, a block, a frame (e.g., an Ethernet frame), a portion of any of the above, and/or another type of formatted or unformatted unit of data capable of being transmitted via a network.

As used herein, satisfying a threshold may, depending on the context, refer to a value being greater than the threshold, greater than or equal to the threshold, less than the threshold, less than or equal to the threshold, equal to the threshold, not equal to the threshold, or the like.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of' a list of items refers to any combination of those items, including single members. As an example, "at least one of: a, b, or c" is intended to cover a, b, c, a-b, a-c, b-c, and a-b-c, as well as any combination with multiple of the same item.

When "a processor" or "one or more processors" (or another device or component, such as "a controller" or "one or more controllers") is described or claimed (within a single claim or across multiple claims) as performing multiple operations or being configured to perform multiple operations, this language is intended to broadly cover a variety of processor architectures and environments. For example, unless explicitly claimed otherwise (e.g., via the use of "first processor" and "second processor" or other language that differentiates processors in the claims), this language is intended to cover a single processor performing or being configured to perform all of the operations, a group of processors collectively performing or being configured to perform all of the operations, a first processor performing or being configured to perform a first operation and a second processor performing or being configured to perform a second operation, or any combination of processors performing or being configured to perform the operations. For example, when a claim has the form "one or more processors to: perform X; perform Y; and perform Z," that claim should be interpreted to mean "one or more processors to perform X; one or more (possibly different) processors to perform Y; and one or more (also possibly different) processors to perform Z."

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of').

## Claims

1. A method, comprising:
sending, by a disaggregated broadband network gateway, DBNG, control plane device, and to a first DBNG user plane device that is an active DBNG user plane device for a subscriber group, SGRP, a first message indicating that the first DBNG user plane device is to be a backup DBNG user plane device for the SGRP; and
sending, by the DBNG control plane device, and to a second DBNG user plane device that is the backup DBNG user plane device for the SGRP, a second message indicating that the second DBNG user plane device is to be the active DBNG user plane device for the SGRP.

2. The method of claim 1, wherein:
sending the first message to the first DBNG user plane device causes a first logical port of the first DBNG user plane device that is associated with the SGRP to have a backup state; and
sending the second message to the second DBNG user plane device causes a second logical port of the second DBNG user plane device that is associated with the SGRP to have an active state.

3. The method of claim 1 or 2, wherein the SGRP is a track-logical-port, TLP, SGRP.

4. The method of claim 1, 2 or 3, wherein each of the first message and the second message is an SGRP modify message.

5. The method of any of claims 1 to 4, further comprising:
receiving, from the first DBNG user plane device, a first acknowledgement message associated with the first message;
receiving, from the second DBNG user plane device, a second acknowledgement message associated with the second message; and
causing, based on receiving the first acknowledgement message and receiving the second acknowledgement message, the first DBNG user plane device to be offlined.

6. The method of any of claims 1 to 5, further comprising:
sending, after sending the first message and the second message, and to the first DBNG user plane device, a third message indicating that the first DBNG user plane device is to be offlined, and for example sending the third message to the first DBNG user plane device causes the first DBNG user plane device to be offlined.

7. A computer-readable medium comprising one or more instructions that, when executed by one or more processors of a disaggregated broadband network gateway, DBNG, user plane device, cause the DBNG user plane device to:
receive, from a DBNG control plane device, a message indicating that a role of the DBNG user plane device for a subscriber group, SGRP, is to change; and
cause, based on the message, the role of the DBNG user plane device for the SGRP to change.

8. The computer-readable medium of claim 8, wherein the one or more instructions, to cause the DBNG user plane device to cause the role of the DBNG user plane device for the SGRP to change, cause one or more selected from the group comprising:
the role of the DBNG user plane device for the SGRP to change from an active role to a backup role;
a logical port of the DBNG user plane device that is associated with the SGRP to have a backup state;
the role of the DBNG user plane device for the SGRP to change from a backup role to an active role; and
a logical port of the DBNG user plane device that is associated with the SGRP to have an active state.

9. The computer-readable medium of claim 7 or 8, wherein the SGRP is a track-logical-port, TLP, SGRP.

10. The computer-readable medium of any of claims 7 to 9, wherein the message is an SGRP modify message.

11. The computer-readable medium of any of claims 7 to 10, wherein the one or more instructions further cause the DBNG user plane device to:
send, based on causing the role of the DBNG user plane device for the SGRP to change, an acknowledgement message.

12. The computer-readable medium of any of claims 7 to 11, wherein the one or more instructions further cause the DBNG user plane device to:
receive, from the DBNG control plane device, another message indicating that the DBNG user plane device is to be offlined; and
cause, based on the other message, the DBNG user plane device to be offlined.

13. A disaggregated broadband network gateway, DBNG, control plane device, comprising:
one or more memories; and
one or more processors to:
send, to a first DBNG user plane device, a first message indicating that the first DBNG user plane device is to cease having an active role for a subscriber group, SGRP, and is to have a backup role for the SGRP; and
send, to a second DBNG user plane device, a second message indicating the second DBNG user plane device is to cease having a backup role for the SGRP and is to have an active role for the SGRP.

14. The DBNG control plane device of claim 13, wherein:
sending the first message to the first DBNG user plane device causes a first logical port of the first DBNG user plane device that is associated with the SGRP to have a backup state; and
sending the second message to the second DBNG user plane device causes a second logical port of the second DBNG user plane device that is associated with the SGRP to have an active state.

15. The DBNG control plane device of claim 13 or 14, wherein the one or more processors are further to:
send, after sending the first message and the second message, a third message to the first DBNG user plane device to cause the first DBNG user plane device to be offlined.
